# EUROPEAN PATENT APPLICATION

(11) **EP 2 050 926 A2**
(43) Date of publication of application: **22.04.2009**
(21) Application number: 08252709.4
(22) Date of filing: 15.08.2008
(51) Int. Cl.: F01D 5/00, B23P 15/02

(54) **Method for restoring airfoil contour on integrally bladed rotors**

(30) Priority: 16.10.2007 US 872883
(71) Applicant: United Technologies Corporation, Hartford, CT 06101 (US)
(72) Inventor: Schwartz, Brian J., West Hartford, CT 06117 (US); Faughnan, Paul R. Jr., East Hampton, CT 06424 (US); Erickson, Robert E., Storrs, CT 06268 (US); Vaillette, Bernard D., Tolland, CT 06084 (US)
(74) Representative: Leckey, David Herbert

(57) **Abstract**

An integrally bladed rotor includes a central hub and a plurality of airfoils or blades (22). The blades (22) are repaired by rebuilding their surfaces beyond the original shape, such as by adding weld material (26). The contour (32) of the blade is then returned to the desired shape using superabrasive quills (30).

## Description

### BACKGROUND OF THE INVENTION

This application relates to a method of repairing airfoils on an integrally bladed rotor, wherein superabrasive machining (SAM) quills are utilized to form the contour of the airfoil.

Gas turbine engines are known, and typically include a plurality of sections mounted in series. Two of the sections are the turbine section and the compressor section. These sections each include a plurality of rotors, each mounting a plurality of circumferentially spaced blades.

One recent development in gas turbine engines is the integrally bladed rotor. Such components include a hub, which is attached to a drive shaft, and which includes a plurality of airfoils extending outwardly from the hub. There may be between 50 and 100 airfoils on a single integrally bladed rotor.

During operation of a gas turbine engine, the rotor and blades are subjected to extreme stress. As an example, when used in the compressor section, sand, birds or other foreign objects may impact upon the airfoil, and damage the shape of the airfoil. It then becomes necessary to repair and restore the airfoils to their desired shape.

In the prior art, hand blending techniques, and grinding wheels are utilized. Also, milling may be used for restoring the tip and upper wall areas. Typically, hand blending is performed after a milling operation to meet surface finish requirements.

The prior art techniques are relatively time-consuming. Moreover, for smaller blades having an airfoil that curves around a smaller radius of curvature, the prior art grinding and machining tools may be too large to fit between adjacent blades and generate the desired contour.

Superabrasive machining techniques have been known and have been utilized for originally forming portions of turbine blades. As an example, U.S. Patent 7,101,263 discloses a superabrasive machine tool. However, superabrasive machining techniques have not been utilized for repairing the airfoils of an integrally bladed rotor.

### SUMMARY OF THE INVENTION

In a disclosed embodiment of this invention, blades of an integrally bladed rotor have airfoils repaired by applying a welding material to various out-of tolerance surfaces of the blades. The weld material is then removed by using a SuperAbrasive Machining (SAM) technique to return the surfaces of the airfoils to the original specifications. A quill having superabrasive material is utilized to return the contour to a desired shape. By utilizing a small diameter SAM quill, one can machine a relatively small radius of curvature on the airfoil. Another SAM tool, such as a grinding wheel, may then be utilized to return the airfoil tip to its desired height.

These and other features of the present invention can be best understood from the following specification and drawings, the following of which is a brief description.

### BRIEF DESCRIPTION OF THE DRAWINGS

Figure 1 shows a first step in the repair of a rotor.
Figure 2 shows a second step.
Figure 3A shows a subsequent step to repair the shape.
Figure 3B shows a tool for performing the Figure 3A step.
Figure 4 shows the tip height being ground.

### DETAILED DESCRIPTION OF THE PREFERRED EMBODIMENT

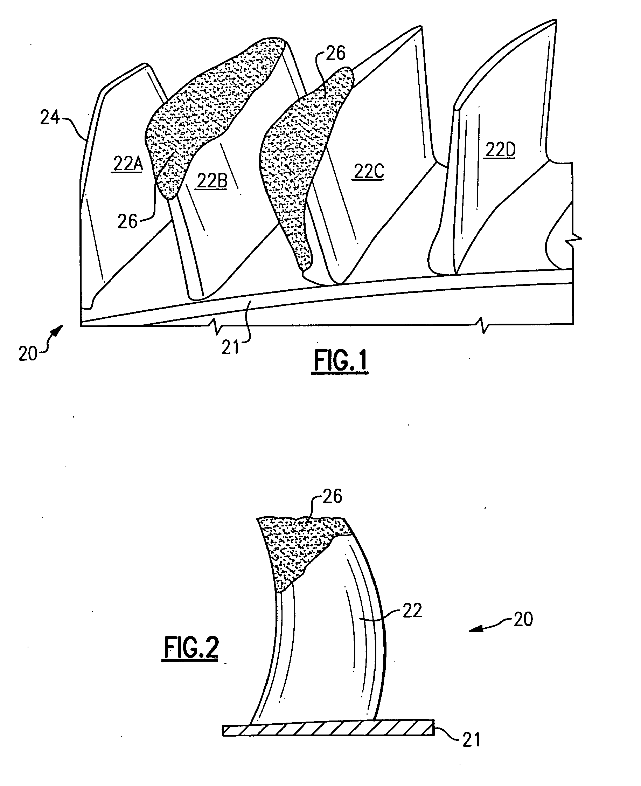

Figure 1 shows a damaged and worn integrally bladed rotor (IBR) 20. As known, blades having airfoils 22 extend toward a tip from a rotor hub 21. Some machining may be done to remove damaged areas of the airfoils. Figure 1 shows the first several steps in the method of this application. As shown at 22A, worn material is cut away from an airfoil, leaving removed areas such as 24 on blade 22A. The next step would be to add material, such as weld material at 26, and as shown on blades 22B and C.

The final step is to cut away the material leaving the desired contour as shown on blade 22D. Such an IBR 20 will typically be taken out of service for repair. The IBR may be part of a compressor for a gas turbine engine.

Figure 2 shows a second step in the repair of the IBR 20. As shown, the airfoil 22 now is returned beyond an original contour and height by adding weld material 26 to extend beyond the desired original surfaces. See also airfoils 22B and 22C in Figure 1.

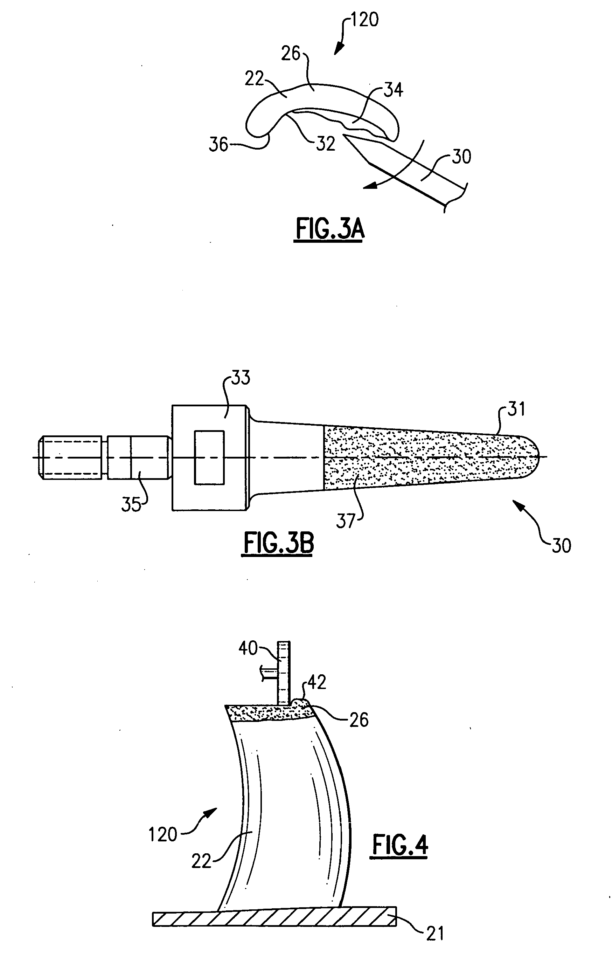

Thus, as shown at 120 in Figure 3A, a superabrasive quill 30 is now used to machine the contour 32 of the airfoils 22. As shown, there may be excess weld material 34 which is cut away by the SAM quill 30 to define the final shape 36.

Figure 3B shows a known SAM quill 30. As known, the edge and the tip 31 perform the actual machining, and has a smaller diameter than a base portion 33. The base portion 33 has a larger diameter than a pilot shaft 35 that is received in a spindle for driving the SAM quill 30 at relatively high speeds. As known, SAM quills have their abrasive material 37 formed from a group including diamond, and cubic boron nitride. An example of a known quill is disclosed in U.S. Patent 7,101,263, the description of which is incorporated herein by reference.

With use of the SAM process, a relatively small diameter quill 30 is used to form the contour 32 as shown in Figure 3A. In this manner, a blade having a relatively small radius of curvature can be machined back to its desired shape.

Figure 4 shows a subsequent step, wherein weld material 26 beyond the desired height is cut away by a SAM grinding wheel 40 to remove excess material 42, and return the airfoil 22 to its desired height.

While a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of repairing an airfoil (22) on an integrally bladed rotor (20) comprising the steps of:
(1) removing at least a damaged area on each of a plurality of worn blades (22) on an integrally bladed rotor (20);
(2) depositing additional material (26) to surfaces of a plurality of blades (22); and
(3) removing some of the additional material (26) to form a desired contour (36) for the airfoil (22), utilizing a superabrasive machining quill (30).

2. The method as set forth in claim 1, wherein the quill (30) has an abrasive surface, formed of a material selected to include at least one of diamond or cubic boron nitride.

3. The method as set forth in claim 1 or 2, wherein a superabrasive grinding wheel (40) returns a height of the blades (22) to a desired height by removing unwanted portions of the additional material (26).

4. The method as set forth in any preceding claim, wherein the additional material (26) is deposited by welding.

5. The method as set forth in any preceding claim, wherein the integrally bladed rotor (20) is part of a compressor for a gas turbine engine.

6. A repaired integrally bladed rotor (20) comprising:
a rotor hub (21) having a plurality of blades (22), each blade (22) having an airfoil;
material (26) added on a surface of at least one of the blades (22), and said airfoils having a contour (32), with said contour (32) being formed in the added material utilizing a superabrasive quill such that the contour follows a desired contour.

7. The repaired integrally bladed rotor as set forth in claim 6, wherein the integrally bladed rotor (20) is part of a compressor for a gas turbine engine.

8. The repaired integrally bladed rotor as set forth in claim 6 or 7, wherein a desired height of the blades (22) is created by utilizing a superabrasive wheel (40).
